# EUROPÄISCHE PATENTSCHRIFT

(11) **EP 2 825 406 B1**
(45) Veröffentlichungstag und Bekanntmachung des Hinweises auf die Patenterteilung: **20.04.2016**
(21) Anmeldenummer: 13706219.6
(22) Anmeldetag: 19.02.2013
(51) Int. Cl.: B60K 5/12, B62D 29/04, B60K 17/06, F16H 57/025

(54) **LAGERBAUTEIL AUS KUNSTSTOFF FÜR AGGREGATE**
PLASTIC BEARING COMPONENT FOR A POWER DRIVE
ELEMENT PALIER EN PLASTIQUE POUR UN GROUPE MOTOPROPULSEUR

(30) Priorität: 15.03.2012 DE 102012102181
(43) Veröffentlichungstag der Anmeldung: 21.01.2015
(73) Patentinhaber: ContiTech Vibration Control GmbH, 30165 Hannover (DE)
(72) Erfinder: KARDAS, Dieter, 30451 Hannover (DE); SCHNEIDER, Diethard, 29336 Nienhagen (DE)
(74) Vertreter: Kilsch, Armin Ralph
(86) Internationale Anmeldenummer: PCT/EP2013/053225
(87) Internationale Veröffentlichungsnummer: WO 2013/135461

(56) Entgegenhaltungen:
- DE-A1- 4 032 587
- FR-A- 571 178
- US-A1- 2011 041 795

## Beschreibung

Die Erfindung betrifft ein Lagerbauteil aus Kunststoff für Aggregate in einer Fahrzeugkarosserie, wobei das Lagerbauteil als Anschluss- und Verbindungsteil zwischen Aggregat und Karosserie dient und dazwischen wirkende Kräfte überträgt, wobei das Lagerbauteil mindestens teilweise kastenartig hohl ausgebildet und mit Verstärkungsrippen und/oder -strukturen versehen ist.

Ein Lagerbauteil nach dem Oberbegriff des Anspruchs 1 ist aus US 2011/041795 bekannt.

Lagerbauteile für Aggregate in einer Fahrzeugkarosserie, also Gehäuse von Motorlagern und weiterführenden Strukturbauteile, z.B. Getriebequerbrücken und Strukturbauteile im Bereich der Aggregatelagerung, werden im Stand der Technik üblicherweise aus Aluminium oder Stahl gefertigt. Daneben ist es grundsätzlich bekannt, dass es möglich ist, derartige Lagerbauteil aus geeigneten Kunststoffen zu fertigen, wenn die Betriebsbelastungen und die Dauerfestigkeit der Kunststoffe für den Anwendungsfall zu korrelieren sind.

Eine Konstruktion aus Aluminium oder Stahl führt zu einem hohen Bauteilgewicht mit den bekannten negativen Folgen für das Fahrzeuggewicht. Wird hingegen als Konstruktionswerkstoff Kunststoff eingesetzt kann das Gewicht des Strukturbauteils erheblich reduziert werden. Nachteilig kann sich gegebenenfalls die reduzierte Festigkeit des Bauteils erweisen - insbesondere in Bezug auf die Anforderungen im Falle eines Unfalls. Die Lasten bei einem Unfall und Fahrzeug-Aufprall (Crash) müssen bei bestimmten Konstellationen ohne Schaden an dem Strukturbauteil überstanden werden.

Dementsprechend ist es Aufgabe der Erfindung, ein Kunststoff-Lagerbauteil für die Lagerung von Aggregaten in einer Fahrzeugkarosserie bereitzustellen, welches hoch belastbar ist und auch den extremen einwirkenden Stoßkräften bei einem Fahrzeug-Aufprall standhält.

Gelöst wird diese Aufgabe durch die Merkmale des Hauptanspruchs. Weitere vorteilhafte Ausbildungen sind in den Unteransprüchen offenbart.

Dabei sind in dem mindestens teilweise kastenartig hohl ausgebildeten und mit Verstärkungsrippen und/oder -strukturen versehenen Lagerbauteil hohlraumfüllende Verstärkungselemente so vorgesehen, dass mindestens Teile des Hohlraumes des kastenartigen Lagerbauteils mit den Verstärkungselementen ausgefüllt sind.

Dadurch dienen die in dem Lagerbauteil eingesetzten Verstärkungselemente als integrierte Festigkeitsträger, welche die mechanische Belastbarkeit des Lagerbauteils insgesamt oder auch partiell und abhängig von der Belastungsrichtung oder Krafteinwirkung so erhöhen, dass das Lagerbauteil Überlasten ohne Schaden übersteht.

Die erfindungsgemäße Lösung ist auch dadurch von Vorteil, dass das ggf. nachträgliche Einsetzen eines Verstärkungselementes als "zusätzliches" Element im Lagerbauteil zu keiner Zykluszeitverlängerung im eigentlichen Fertigungsvorgang des Lagerbauteils führt.

Gemäß die Erfindung sind Teile des Hohlraumes mit monolithischen Verstärkungselementen ausgefüllt. Solche Elemente erzeugen eine besonders große Festigkeitserhöhung.

Eine weitere vorteilhafte Ausbildung besteht darin, dass Teile des Hohlraumes des kastenartigen Lagerbauteils nur zu einem Teil ihrer Tiefe bzw. Höhe mit Verstärkungselementen ausgefüllt sind, also z.B. nur bis zur Hälfte ausgefüllt sind. Dadurch wird die Erhöhung der Festigkeit lokal hochgenau anpassbar.

Eine weitere vorteilhafte Ausbildung besteht darin, dass die Verstärkungselemente aus einem anderen Material als das Lagerbauteil bestehen, vorzugsweise aus Metall oder Kunststoff. Über eine solche Materialauswahl kann auf einfache Weise eine auf das Fahrzeug oder auf den Anwendungsfall angepasste Erhöhung der Belastbarkeit durchgeführt werden.

Eine weitere vorteilhafte Ausbildung besteht darin, dass die Verstärkungselemente innerhalb des Lagerbauteiles fixiert sind, vorzugsweise durch einen Hinterschnitt oder durch eine Klebung. Damit lässt sich einerseits eine vorgefertigte Baugruppe herstellen, die ohne weitere Montageschritte in das Fahrzeug eingebaut werden kann, andererseits ist eine einfache und sichere Fixierung auch bei nachträglichem Einbau möglich.

Vorteilhafterweise ist das Lagerbauteil im Spritzgussverfahren aus Kunststoff hergestellt. Damit ist es möglich, die Verstärkungselemente bereits während des Herstellungsprozesses im Lagerbauteil einzulegen und zu umspritzen. Eine zusätzliche Fixierung erübrigt sich dann.

Eine weitere vorteilhafte Ausbildung besteht darin, dass die Verstärkungselemente als Teil der Karosserie ausgebildet sind. Mit einer solchen Ausbildung erfolgt die Integration der Verstärkungselemente erst während des Einbaus in die Karosserie. Dies bringt Vorteile bei Transport und Lagerung der Lagerbauteile vor dem Einbau und erhöht die Anpassungsmöglichkeiten auf besondere Karosserieformen.

Eine weitere vorteilhafte Ausbildung besteht darin, dass mindestens die Teile des Hohlraumes des kastenartigen Lagerbauteils mit hohlraumfüllenden Verstärkungselementen ausgefüllt sind, die zur Stoßaufnahme bei einem Fahrzeug-Aufprall (Crash) vorgesehen sind. Damit entsteht eine besonders zielgerichtete Belastungsanpassung der Lagerbauteile.

Besonders vorteilhaft lässt sich das erfindungsgemäße Lagerbauteil als Getriebequerträger in einem Fahrzeug verwenden, beispielsweise als rückseitiger Träger für das Getriebe eines Kraftfahrzeuges mit Standardantrieb, also mit längs zur Fahrtrichtung eingebauter Motor-Getriebeeinheit.

Ein genereller Vorteil besteht darin, dass das Lagerbauteil durch die erfindungsgemäße Ausbildung besonders dünnwandig und damit in besonders kurzer Zykluszeit hergestellt werden kann. Auch erlaubt die erfindungsgemäße Ausbildung das Erstellen eines Baukastensystems, bei dem Verstärkungselemente nur für die Fahrzeuge in das Lagerbauteil eingesetzt werden, deren Karosseriebauweise und Lagerungen für Aggregate die Funktion der partiellen Erhöhung der Belastbarkeit auch erfordern.

Anhand eines Ausführungsbeispieles soll die Erfindung näher erläutert werden. Es zeigen
- Fig. 1: ein als Getriebequerträger ausgebildetes erfindungsgemäßes Lagerbauteil
- Fig. 2: den Getriebequerträger 1 gemäß Fig. 1 in einer anderen Ansicht
- Fig. 3: den Getriebequerträger 1 gemäß Fig. 1 in einer weiteren Ansicht
- Fig. 4: eine typische Einbausituation für den Getriebequerträger 1 gemäß Fig. 1 in einem PKW

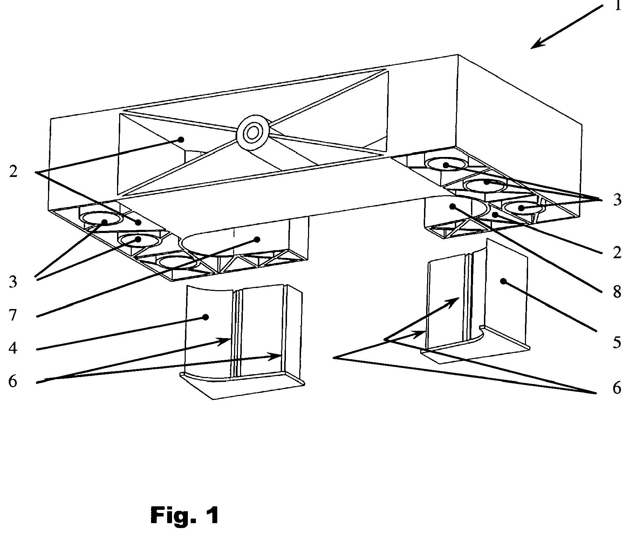

Die Fig. 1 zeigt ein als Getriebequerträger 1 ausgebildetes Lagerbauteil aus Kunststoff für Aggregate in einer Fahrzeugkarosserie, hier vorgesehen als rückseitiger Träger für das Getriebe eines Personenkraftwagens. Der Getriebeträger 1 ist in einer Ansicht von schräg unten dargestellt, in Fahrtrichtung gesehen, d.h. in Blickrichtung vom hier nicht gezeigten Motor aus gesehen.

Der Getriebeträger dient als Anschluss- und Verbindungsteil zwischen Aggregat, d.h. Getriebe und hier nicht näher dargestellter Karosserie und überträgt dazwischen wirkende Kräfte.

Der Getriebeträger 1 ist hier kastenartig hohl ausgebildet und mit einer Anzahl von Verstärkungsrippen 2 und hohlzylinderförmigen Strukturen 3 versehen Einige Teile des Hohlraumes des kastenartigen Getriebeträgers sind mit hohlraumfüllenden Verstärkungselementen 4 und 5 ausgefüllt, hier mit monolithischen Verstärkungselementen aus Aluminium, die mit Einschnitten 6 zur komplementären Passung mit den Verstärkungsrippen 2 und hohlzylinderförmigen Strukturen 3 vorgesehen sind.

Die Verstärkungselemente 4 und 5 werden innerhalb des Lagerbauteils durch Klebung fixiert.

Bei diesem Ausführungsbeispiel eines Getriebeträgers sind die Teile 7 und 8 seines Hohlraumes mit den hohlraumfüllenden Verstärkungselementen 4, 5 ausgefüllt. Diese zur Mitte des Getriebeträgers 1 vorspringenden Teile 7 und 8 dienen der Stoßaufnahme bei einem Fahrzeugaufprall und fangen bei einem Aufprall auf das Getriebe wirkende Beschleunigungskräfte auf.

Durch die erfindungsgemäße Lösung ist es möglich, auf einfache und anpassbare Weise den Belastbarkeitsanforderung bei einem Crash zur Versicherungseinstufung zu genügen.

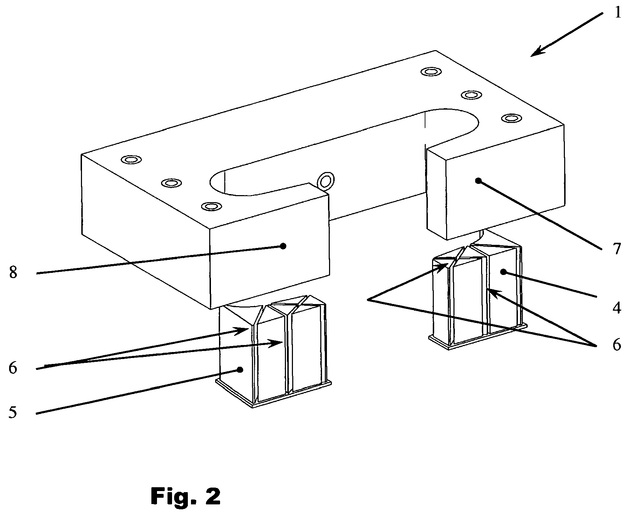

Fig. 2 zeigt den als Getriebequerträger 1 gemäß Fig. 1 in einer Ansicht von schräg oben in Blickrichtung vom hier nicht dargestellten Motor, von der anderen Fahrzeugseite aus gesehen. Auch sind die Verstärkungselemente 4, 5 noch nicht eingeschoben bzw. eingeklebt und noch unterhalb des Getriebequerträgers erkennbar.

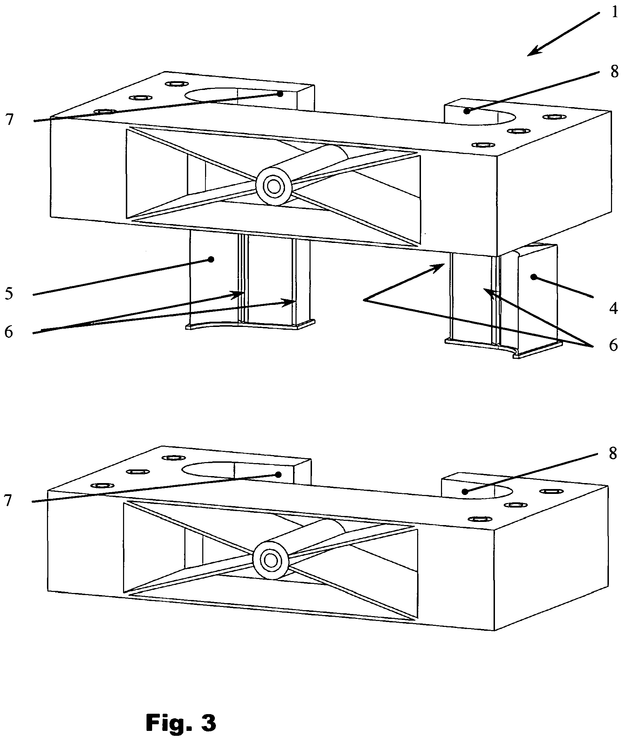

Fig. 3 zeigt ebenfalls den als Getriebequerträger 1 gemäß Fig. 1 in einer Ansicht von schräg oben in Blickrichtung vom hier nicht dargestellten Motor, jedoch von der gleichen Fahrzeugseite aus gesehen wie in Fig. 1. Im oberen Teil der Fig. 3 sind die Verstärkungselemente 4, 5 noch nicht eingeschoben bzw. eingeklebt und noch unterhalb des Getriebequerträgers erkennbar, während im unteren Teil die Verstärkungselemente 5 bereits in den Getriebequerträger 1 eingebracht sind.

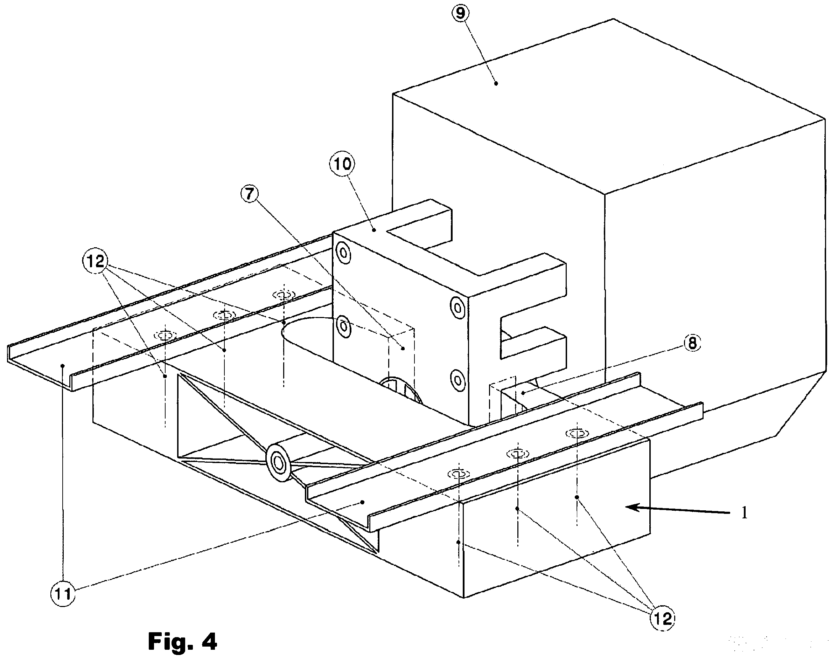

Zur Verdeutlichung der Einbausituation zeigt Fig. 4 ein Getriebe 9, welches über ein hinteres Getriebelager 10 am bzw. auf dem erfindungsgemäßen Getriebeträger 1 gelagert und über letzteren mit Hilfe von Schraubverbindungen 12 an Karosserieträgern 11 einer Fahrzeugkarosserie befestigt ist.

### Bezugszeichenliste

### (Teil der Beschreibung)

- 1: Getriebeträger
- 2: Verstärkungsrippe
- 3: hohlzylinderförmige Struktur
- 4: Verstärkungselement
- 5: Verstärkungselement
- 6: Einschnitt
- 7: Vorspringendes Teil zur Stoßaufnahme bei einem Fahrzeug-Aufprall
- 8: Vorspringendes Teil zur Stoßaufnahme bei einem Fahrzeug-Aufprall
- 9: Getriebe
- 10: Getriebelager
- 11: Karosserieträger
- 12: Verschraubung

## Patentansprüche

1. Lagerbauteil (1) aus Kunststoff für Aggregate (9) in einer Fahrzeugkarosserie, wobei das Lagerbauteil als Anschluss- und Verbindungsteil zwischen Aggregat und Karosserie dient und dazwischen wirkende Kräfte überträgt, wobei das Lagerbauteil (1) mindestens teilweise kastenartig hohl ausgebildet und mit Verstärkungsrippen und/oder -strukturen (2, 3) versehen ist, wobei mindestens Teile des Hohlraumes des kastenartigen Lagerbauteils mit hohlraumfüllenden monolithischen Verstärkungselementen (4, 5) ausgefüllt sind, **dadurch gekennzeichnet, dass** die monolithischen Verstärkungselementen mit Einschnitten (6) zur komplementären Passung mit den Verstärkungsrippen und/oder -strukturen (2, 3) versehen sind.

2. Lagerbauteil nach Anspruch 1, bei dem Teile des Hohlraumes des kastenartigen Lagerbauteils nur zu einem Teil ihrer Tiefe mit Verstärkungselementen ausgefüllt sind.

3. Lagerbauteil nach einem der Ansprüche 1 oder 2, bei dem die Verstärkungselemente (4, 5) aus einem anderen Material als das Lagerbauteil bestehen, vorzugsweise aus Metall oder Kunststoff.

4. Lagerbauteil nach einem der Ansprüche 1 bis 3, bei dem die Verstärkungselemente (4, 5) innerhalb des Lagerbauteiles (1) fixiert sind, vorzugsweise durch einen Hinterschnitt oder durch eine Klebung.

5. Lagerbauteil nach einem der Ansprüche 1 bis 4, hergestellt im Spritzgussverfahren aus Kunststoff, bei dem die Verstärkungselemente (4, 5) im Lagerbauteil (1) umspritzt sind.

6. Lagerbauteil nach einem der Ansprüche 1 bis 5, bei dem die Verstärkungselemente als Teil der Karosserie ausgebildet sind.

7. Lagerbauteil nach einem der Ansprüche 1 bis 6, bei dem mindestens die Teile (7, 8) des Hohlraumes des kastenartigen Lagerbauteils, die zur Stoßaufnahme bei einem Fahrzeug-Aufprall (Crash) vorgesehen sind, mit hohlraumfüllenden Verstärkungselementen (4, 5) ausgefüllt sind.

8. Lagerbauteil nach einem der Ansprüche 1 bis 7, ausgebildet als Getriebequerträger.

## Claims

1. Plastic bearing component (1) for power units (9) in a vehicle body, wherein the bearing component serves as a connecting part between the power unit and the body and transfers forces acting between them, wherein the bearing component (1) is at least partially formed in a box-like hollow manner and is provided with reinforcing ribs and/or structures (2, 3), wherein at least parts of the hollow space of the box-like bearing component are filled with hollow-space-filling monolithic reinforcing elements (4, 5), **characterized in that** the monolithic reinforcing elements are provided with incisions (6) for complementarily fitting together with the reinforcing ribs and/or structures (2, 3).

2. Bearing component according to Claim 1, in which parts of the hollow space of the box-like bearing component are filled with reinforcing elements only up to part of their depth.

3. Bearing component according to either of Claims 1 and 2, in which the reinforcing elements (4, 5) consist of a different material than the bearing component, preferably of metal or plastic.

4. Bearing component according to one of Claims 1 to 3, in which the reinforcing elements (4, 5) are fixed within the bearing component (1), preferably by an undercut or by an adhesive bond.

5. Bearing component according to one of Claims 1 to 4, produced from plastic by the injection-moulding process, in which the reinforcing elements (4, 5) are encapsulated in the bearing component (1).

6. Bearing component according to one of Claims 1 to 5, in which the reinforcing elements are formed as part of the body.

7. Bearing component according to one of Claims 1 to 6, in which at least the parts (7, 8) of the hollow space of the box-like bearing component that are intended for shock absorption in a vehicle collision (crash) are filled with hollow-space-filling reinforcing elements (4, 5).

8. Bearing component according to one of Claims 1 to 7, formed as a gearbox cross member.

## Revendications

1. Composant de palier en plastique (1) pour un groupe motopropulseur (9) dans une carrosserie de véhicule, le composant de palier servant de pièce de raccordement et de connexion entre le groupe motopropulseur et la carrosserie et transmettant les forces agissant entre eux, le composant de palier (1) étant réalisé au moins en partie sous forme de caisson creux et étant pourvu de nervures de renforcement et/ou de structures de renforcement (2, 3), au moins des parties de la cavité du composant de palier en forme de caisson étant remplies d'éléments de renforcement monolithiques (4, 5) remplissant la cavité, **caractérisé en ce que** les éléments de renforcement monolithiques sont pourvus d'entailles (6) pour l'adaptation complémentaire avec les nervures de renforcement et/ou les structures de renforcement (2, 3).

2. Composant de palier selon la revendication 1, dans lequel des parties de la cavité du composant de palier en forme de caisson sont seulement remplies sur une partie de leur profondeur avec des éléments de renforcement.

3. Composant de palier selon l'une quelconque des revendications 1 ou 2, dans lequel les éléments de renforcement (4, 5) se composent d'un autre matériau que le composant de palier, de préférence de métal ou de plastique.

4. Composant de palier selon l'une quelconque des revendications 1 à 3, dans lequel les éléments de renforcement (4, 5) sont fixés à l'intérieur du composant de palier (1), de préférence par une contre-dépouille ou par un collage.

5. Composant de palier selon l'une quelconque des revendications 1 à 4, fabriqué par un procédé de moulage par injection de plastique, dans lequel les éléments de renforcement (4, 5) sont surmoulés dans le composant de palier (1).

6. Composant de palier selon l'une quelconque des revendications 1 à 5, dans lequel les éléments de renforcement sont réalisés en tant que partie de la carrosserie.

7. Composant de palier selon l'une quelconque des revendications 1 à 6, dans lequel au moins les parties (7, 8) de la cavité du composant de palier en forme de caisson, qui sont prévues pour absorber les chocs en cas de collision du véhicule (accident), sont remplies d'éléments de renforcement (4, 5) remplissant la cavité.

8. Composant de palier selon l'une quelconque des revendications 1 à 7, réalisé sous forme de support transversal de transmission.
